**Europäisches Patentamt**

**European Patent Office**

**Office européen des brevets**

(19)

(11) Numéro de publication : **0 220 225 B1**

(12)

# FASCICULE DE BREVET EUROPEEN

(45) Date de publication du fascicule du brevet :
**13.03.91 Bulletin 91/11**

(51) Int. Cl.⁵ : **C08L 55/02**

(21) Numéro de dépôt : **86902438.0**

(22) Date de dépôt : **29.04.86**

(86) Numéro de dépôt international :
**PCT/FR86/00145**

(87) Numéro de publication internationale :
**WO 86/06396 06.11.86 Gazette 86/24**

(54) COMPOSITIONS THERMOPLASTIQUES A HAUTE RESISTANCE AU CHOC A BASE DE RESINE DU TYPE ACRYLONITRILE-BUTADIENE-STYRENE, ET ARTICLES INDUSTRIELS OBTENUS.

(30) Priorité : **02.05.85 FR 8506645**

(43) Date de publication de la demande :
**06.05.87 Bulletin 87/19**

(45) Mention de la délivrance du brevet :
**13.03.91 Bulletin 91/11**

(84) Etats contractants désignés :
**BE CH DE FR GB IT LI LU NL SE**

(56) Documents cités :
**FR-A- 2 536 080**

(73) Titulaire : **ATOCHEM**
**4 & 8, Cours Michelet La Défense 10**
**F-92800 Puteaux (FR)**

(72) Inventeur : **ERPELDING, Michel**
**27, rue Jean Jaurès**
**F-60740 Saint Maximin (FR)**

(74) Mandataire : **Rochet, Michel**
**ATOCHEM Département Propriété Industrielle**
**La Défense 10 Cédex 42**
**F-92091 Paris La Défense (FR)**

## Description

La présente invention concerne des compositions thermoplastiques à haute résistance au choc à base de résine du type acrylonitrile-butadiène-styrène, ignifugées le cas échéant, et des articles industriels obtenus à partir desdites compositions.

On connaît déjà par le brevet FR-A-2.536.080 une composition de résine thermoplastique donnant des articles moulés mats comprenant (A) une résine du type acrylonitrile-butadiène-styrène et (B) un polymère d'oléfine modifié par un acide carboxylique insaturé et, le cas échéant, par au moins un composé à insaturation éthylénique. Parmi ces polymères (B) sont envisagés des polymères d'éthylène modifiés par l'anhydride maléïque et, le cas échéant, un (méth)acrylate d'alkyle, ces polymères étant préparés par exemple en ajoutant l'anhydride maléïque au polymère d'éthylène et en chauffant le mélange. La quantité de polymère (B) dans la composition est de préférence comprise entre 0,1 et 40 parties en poids pour 100 parties en poids de résine (A). L'exemple 7 de ce brevet décrit plus particulièrement une composition comprenant 100 parties en poids d'une résine acrylonitrile-butadiène-styrène (ayant une résistance au choc Izod de 180 J/m, une température de déformation à la chaleur de 98,5°C et une brillance spéculaire à 60° de 90%) et 3 parties en poids d'un polymère préparé en ajoutant 0,5 partie d'anhydride maléïque à 100 parties de poudre de polyéthylène et en malaxant le mélange à 200°C. La composition obtenue présente une résistance au choc Izod de 180 J/m, une température de déformation à la chaleur de 98°C et une brillance spéculaire à 60° de 28%. Ainsi selon l'enseignement de ce document l'incorporation, à une résine du type acrylonitrile-butadiène-styrène, d'une faible proportion d'un polymère d'éthylène greffé par de l'anhydride maléïque a pour effet de diminuer fortement la brillance des articles moulés obtenus sans pour autant modifier leur résistance au choc et leur température de déformation à la chaleur.

Le problème visé par la présente invention est tout différent. On se propose ici d'améliorer la résistance au choc, l'indice de fluidité à chaud et la température de déformation à la chaleur des résines du type acrylonitrile-butadiène-styrène.

Un premier objet de la présente invention concerne donc une composition thermoplastique à haute résistance au choc comprenant de 75 à 99% en poids d'une résine (A) de type acrylonitrile-butadiène-styrène et de 1 à 25% en poids d'au moins un polymère d'éthylène (B) comprenant des motifs dérivés de l'anhydride maléïque, caractérisée en ce que ledit polymère d'éthylène est un copolymère non greffé comprenant de 0,3 à 3% en moles de motifs dérivés de l'anhydride maléïque et qu'il comprend en outre jusqu'à 15% en moles de motifs dérivés d'au moins un ester de l'acide acrylique ou méthacrylique. Ainsi le trait essentiel de la présente invention réside dans le fait que, contrairement à l'art antérieur analysé précédemment, l'anhydride maléïque présente dans le polymère d'éthylène de la composition n'est pas greffé sur la chaine macromoléculaire de polyéthylène mais véritablement inséré dans la chaine macromoléculaire, en alternance avec les motifs dérivés de l'éthylène et en tant que comonomère. Cette particularité de la structure macromoléculaire du polymère d'éthylène permet de manière surprenante, à teneur sensiblement équivalente d'anhydride maléïque dans ledit polymère d'éthylène, d'améliorer la résistance au choc et la température de déformation à la chaleur de la composition, ce qui n'était pas le cas selon l'art antérieur.

La préparation de copolymères non greffés d'éthylène et d'anhydride maléïque est bien connue depuis longtemps de l'homme de l'art et procède par copolymérisation directe à haute température et sous pression élevée en présence d'initiateurs de radicaux libres. Le copolymère non greffé entrant dans la constitution de la composition selon l'invention comprend des motifs dérivés d'au moins un ester de l'acide acrylique ou méthacrylique tel que notamment un acrylate ou méthacrylate d'alkyle dont le radical alkyle possède de 1 à 8 atomes de carbone. De tels motifs sont présents à raison de jusqu'à 15% en moles dans le polymère d'éthylène. La préparation de terpolymères d'éthylène, d'anhydride maléïque et d'esters de l'acide acrylique ou méthacrylique est bien connue, notamment par les brevets FR-A-2.498.609, FR-A-2.569.411 et EP-A-2.569.412.

En résumé les polymères d'éthylène utilisables selon la présente invention sont des copolymères non greffés comprenant

– au moins 82% en moles de motifs dérivés de l'éthylène,

– de 0,3 à 3% en moles de motifs dérivés de l'anhydride maléïque, et jusqu'à 15% en moles de motifs dérivés d'au moins un ester de l'acide acrylique ou méthacrylique.

Avantageusement ces copolymères ont un indice de fluidité standard (déterminé à 190°C selon la norme ASTM D 1238-73) compris entre 1 et 50 dg/min.

Par résine de type acrylonitrile-butadiène-styrène au sens de la présente invention on entend un polymère (A) constitué d'au moins un terpolymère obtenu par greffage de (a) au moins un monomère vinylaromatique et de (b) au moins un nitrile insaturé sur (c) au moins un caoutchouc, ledit terpolymère étant dispersé dans une matrice d'un copolymère comprenant des motifs dérivés de (d) au moins un nitrile insaturé et de (e) au moins un monomère vinylaromatique, la composition globale dudit polymère (A) étant telle que, pour 100 parties en poids, il comprend de 17 à 35 parties de nitrile insaturé, de 10 à 60 parties de caoutchouc et de 10 à 60 parties de monomère vinylaromatique.

Pour la bonne compréhension de l'invention, il convient de préciser que :

– le monomère vinylaromatique (a) et le monomère vinylaromatique (e), identiques ou différents l'un de l'autre, sont de préférence choisis parmi le styrène et ses dérivés tels que l'alphaméthylstyrène, le vinyltoluène et le vinylnaphtalène.

– le nitrile insaturé (b) et le nitrile insaturé (d), identiques ou différents l'un de l'autre, sont de préférence l'acrylonitrile.

– le caoutchouc (c) est de préférence choisi parmi le polybutadiène, le polyisoprène, les copolymères butadiène/isoprène, les élastomères éthylène-propylène et éthylène-propylène-diène.

La composition thermoplastique selon l'invention peut en outre comprendre de 1 à 20% d'au moins un produit de polycondensation à fonctions esters, présentant un poids moléculaire supérieur à 1000, lesdits esters dérivant d'alkylène et/ou polyalkylène-diols et d'acides dicarboxyliques ou d'acides-alcools tels que décrits par exemple par le brevet FR-A-1.576.422.

La composition thermoplastique selon l'invention peut en outre comprendre au moins un lubrifiant, de préférence à raison de jusqu'à 4 parties en poids pour 100 parties en poids du mélange (A) + (B). Un tel lubrifiant peut être choisi notamment parmi :

– les sels d'acides carboxyliques d'un métal choisi parmi les éléments des groupes IA, IIA et IIB de la Classification Périodique, en particulier les stéarates de calcium, zinc, lithium et magnésium,

– les cires de polyéthylènes oxydées,

– les esters d'acides gras telle que la glycérine,

– la N,N'-éthylène bis stéaramide.

La composition thermoplastique selon l'invention peut en outre comprendre au moins un agent d'ignifugation. Comme agent d'ignifugation on choisira de préférence un système convenable pour l'ignifugation du constituant majoritaire de la composition, c'est-à-dire du polymère (A). Un tel système comprend généralement au moins un composé halogéné et au moins un oxyde métallique. Le composé halogéné, qui peut être notamment choisi parmi les diphényléthers bromés ou encore le tribromophénoxyéthane, est utilisé de préférence à raison de jusqu'à 50 parties en poids pour 100 parties en poids du polymère (A). L'oxyde métallique, qui peut être notamment l'oxyde d'antimoine $Sb_2O_3$, est utilisé de préférence à raison de jusqu'à 30 parties en poids pour 100 parties en poids du polymère (A).

La composition thermoplastique selon l'invention peut être obtenue par toute méthode conventionnelle de mélange, en mettant en oeuvre tout dispositif adapté au mélange de polymères tels que (A) et (B), par exemple un malaxeur ou un mélangeur interne. Dans le cas où la composition selon l'invention comprend un agent d'ignifugation, elle peut être obtenue en mélangeant préalablement l'agent d'ignifugation soit à la résine (A) soit au polymère d'éthylène (B).

Les compositions décrites précédemment possèdent un ensemble de propriétés remarquables par rapport à celles de l'art antérieur, notamment :

– une résistance au choc Izod (mesurée selon la norme ISO-R-180, équivalente à ASTM-D 256) améliorée,

– une température Vicat (mesurée selon la norme ISO-R-306, équivalente à ASTM-D 1525) plus élevée,

– un indice de fluidité à chaud (mesuré selon la méthode décrite aux exemples ci-après) plus élevé.

Cet ensemble de propriétés remarquables rend les compositions selon l'invention particulièrement intéressantes du point de vue de la facilité de transformation et pour toutes les applications exigeant à la fois de bonnes propriétés mécaniques et une bonne résistance à la chaleur.

C'est pourquoi un second objet de la présente invention consiste en l'application des compositions décrites précédemment à l'obtention d'articles industriels par injection, extrusion et thermoformage. Par la technique d'injection on pourra notamment obtenir, en soumettant la composition à une température comprise entre 240°C et 275°C, des pièces telles que des planches de bord, consoles et boitiers de feux arrière pour véhicules automobiles, des boitiers de compteurs ou de projecteurs, des pièces pour climatisation, etc. Par la technique d'extrusion on pourra notamment obtenir des plaques d'une largeur allant jusqu'à 3 mètres et d'une épaisseur généralement comprise entre 1 et 10 mm. Ces plaques sont destinées à être soumises à un thermoformage, à une température étagée entre 230° et 250°C, pour obtenir des pièces telles que des boitiers et enveloppes pour appareillages électriques et électroniques, des pièces pour l'habillage intérieur des véhicules automobiles, etc.

La présente invention trouvera aussi des applications dans des domaines aussi variés que l'ameublement, les bagages, les bateaux et planches à voile, le bâtiment, les caravanes, les motocyclettes, l'électroménager, la bureautique, l'informatique, l'équipement de jardin, les réfrigérateurs, les matériels de radio, vidéo, photo et télévision, les skis, le téléphone et la télématique, les tuyaux et raccords, les casques de motocyclistes.

Les exemples suivants sont donnés à titre illustratif et non limitatifs de la présente invention.

3

## Exemple 1 (comparatif).

On prépare, par mélange sur un mélangeur interne de 9 litres tournant à la vitesse de 70 tours/min, à la température de 200°C et pendant 2 minutes, une composition comprenant :
– 100 parties en poids d'un polymère (A₁) en poudre commercialisé par la société CREACHIMIE sous la marque UGIKRAL SN, comprenant 19% en poids de polybutadiène, 24% en poids d'acrylonitrile et 57% en poids de styrène, et
– 3 parties en poids d'un lubrifiant constitué d'éthylène-bis-stéaramide et commercialisé sous la marque SYMTEWAX par la société COMIEL.
Sur la composition ainsi obtenue on mesure les propriétés suivantes :
– résistance au choc Izod, exprimée en J/m et déterminée à 23°C sur un barreau entaillé de 63,5×12,7×3,2 mm conformément à la norme ISO-R-180.
– température Vicat, exprimée en degrés Celsius et déterminée sous 9,8 N conformément à la norme ISO-R-306.
– indice de fluidité à chaud (IFC), exprimé en cm et déterminé comme étant la longueur parcourue par la matière injectée à 250°C dans un moule spirale de section 2×12,5 mm sous l'effet d'une pression de 100 Mpa.
Les résultats de ces mesures figurent au tableau I ci-après.

## Exemple 2

On prépare, dans les conditions opératoires de l'exemple 1, une composition comprenant, outre le polymère (A₁) et le lubrifiant, 10 parties en poids d'un terpolymère ayant un indice de fluidité standard de 4 dg/min et comprenant 89,3% en moles de motifs dérivés de l'éthylène, 10% en moles de motifs dérivés de l'acrylate d'éthyle et 0,7% en moles de motifs dérivés de l'anhydride maléïque. Les résultats des mesures de propriétés effectuées sur cette composition figurent au tableau I.

## Exemple 3 (comparatif)

On prépare, dans les conditions opératoires de l'exemple 1, une composition comprenant :
– 100 parties en poids d'un polymère (A₂) en poudre commercialisé par la société CREACHIMIE sous la marque UGIKRAL TF, comprenant 15% en poids de polybutadiène, 25% en poids d'acrylonitrile, 15% en poids de styrène et 45% en poids d'alphaméthylstyrène, et
– 1 partie en poids du lubrifiant décrit à l'exemple 1.
Les résultats des mesures de propriétés effectuées sur cette composition figurent au tableau I.

## Exemple 4

On prépare, dans les conditions opératoires de l'exemple 3, une composition comprenant, outre le polymère (A₂) et le lubrifiant, 11 parties en poids du terpolymère décrit à l'exemple 2. Les résultats des mesures de propriétés effectuées sur cette composition figurent au tableau I.

## TABLEAU I

| Exemple | 1 | 2 | 3 | 4 |
|---------|------|-----|-------|-------|
| Izod | 290 | 465 | 230 | 415 |
| Vicat | 98,7 | 101 | 111,5 | 113,4 |
| IFC | 53 | 60 | 36 | 38 |

## Exemple 5 (comparatif)

On transforme, dans les conditions opératoires de l'exemple 1, un polymère en poudre (A₃) de type acry-

Ionitrile-butadiène-styrène, commercialisé par la société CREACHIMIE sous la marque UGIKRAL AI, comprenant 5,47% en poids d'oxyde d'antimoine comme agent ignifugeant. La résistance au choc Izod de ce polymère ignifugé, déterminée comme aux exemples précédents, est égale à 138 J/m.

**Exemple 6**

On transforme, dans les conditions de l'exemple 5, une composition comprenant :
– 93,16 parties en poids du polymère (A₃) en poudre exempt d'oxyde d'antimoine, et
– 6,84 parties en poids d'un mélange comprenant 80% d'oxyde d'antimoine (c'est-à-dire 5,47 parties en poids, comme dans l'exemple 5) et 20% d'un terpolymère ayant un indice de fluidité standard de 4,1 dg/min. et comprenant 89,1% en moles de motifs dérivés l'éthylène, 10,2% en moles de motifs dérivés de l'acrylate de butyle et 0,7% en moles de motifs dérivés de l'anhydride maléïque (soit 1,37 parties en poids).
La résistance au choc Izod de cette composition ignifugée, déterminée comme aux exemples précédents, est égale à 185 J/m.

**Revendications**

1. Composition thermoplastique à haute résistance au choc comprenant :
– de 75 à 99% en poids d'un polymère (A) de type acrylonitrile-butadiène-styrène constitué d'au moins un terpolymère obtenu par greffage de (a) au moins un monomère vinylaromatique et de (b) au moins un nitrile insaturé sur (c) au moins un caoutchouc, ledit terpolymère étant dispersé dans une matrice d'un copolymère comprenant des motifs dérivés de (d) au moins un nitrile insaturé et de (e) au moins un monomère vinylaromatique, la composition globale dudit polymère (A) étant telle que, pour 100 parties en poids, il comprend de 17 à 35 parties de nitrile insaturé, de 10 à 60 parties de caoutchouc et de 10 à 60 parties de monomère vinylaromatique, et
– de 1 à 25% en poids d'au moins un polymère d'éthylène (B) comprenant :
• au moins 82% en moles de motifs dérivés de l'éthylène,
• de 0,3 à 3% en moles de motifs dérivés de l'anhydride maléique, caractérisé en ce que ledit polymère d'éthylène (B) est un polymère non greffé de l'anhydride maléique et en ce qu'il comprend en outre des motifs dérivés d'au moins un ester de l'acide acrylique ou méthacrylique à raison de jusqu'à 15% en moles.
2. Composition thermoplastique selon la revendication 1, caractérisée en ce que l'indice de fluidité standard du polymère (B) est compris entre 1 et 50 dg/min.
3. Composition thermoplastique selon l'une des revendications 1 et 2, caractérisée en ce qu'elle comprend en outre de 1 à 20% d'au moins un produit de polycondensation à fonctions esters, présentant un poids moléculaire supérieur à 1000, lesdits esters dérivant d'alkylène et/ou polyalkylène-diols et d'acides dicarboxyliques ou d'acides-alcools.
4. Composition thermoplastique selon l'une des revendications 1 à 3, caractérisée en ce qu'elle comprend en outre au moins un lubrifiant.
5. Composition thermoplastique selon la revendication 4, caractérisée en ce que ledit lubrifiant est choisi parmi les sels d'acides carboxyliques d'un métal choisi parmi les éléments des groupes IA, IIA et IIB de la Classification Périodique, les cires de polyéthylènes oxydées, les esters d'acides gras et la N,N'-éthylène bis stéaramide.
6. Composition thermoplastique selon l'une des revendications 4 et 5, caractérisée en ce que ledit lubrifiant est présent à raison de jusqu'à 4 parties en poids pour 100 parties en poids du mélange (A) + (B).
7. Composition thermoplastique selon l'une des revendications 1 à 6, caractérisée en ce qu'elle comprend en outre au moins un agent d'ignifugation.
8. Articles industriels obtenus par injection, extrusion ou thermoformage d'une composition thermoplastique selon l'une des revendications 1 à 7.

**Ansprüche**

1. Thermoplastische Zusammensetzung mit hoher Schlagfestigkeit, die enthält :
– 75 bis 99 Gew.-% eines Polymers (A) des Acrylnitril-Butadien-Styroltyps, das mindestens ein Terpolymer enthält, das durch Pfropfung von (a) mindestens einem vinylaromatischen Monomer und von (b) mindestens einem ungesättigten Nitril auf (c) mindestens einem Kautschuk erhalten wurde, dieses Terpolymer wurde dispergiert in einer Matrix eines Copolymers, das Struktureinheiten enthält, die von (d) mindestens einem ungesättigten Nitril und von (e) mindestens einem vinylaromatischen Monomer abgeleitet sind, die Gesamtzusammensetzung des Polymers (A) ist so beschaffen, daß es in 100 Gew.-Teilen enthält : 17 bis 35 Teile ungesättigten Nitrils, 10 bis 60 Teile Kautschuks und 10 bis 60 vinylaromatischen Monomers, und – 1 bis 25 Gew.-% mindestens eines Polymers aus Ethylen (B), das enthält :

• mindestens 82 Mol-% von Ethylen abgeleitete Struktureinheiten,

• 0,3 bis 3 Mol-% von Maleinsäureanhydrid abgeleitete Struktureinheiten, **dadurch gekennzeichnet,** daß das Polymer aus Ethylen (B) ein Polymer ist, das nicht von Maleinsäureanhydrid gepfropft wurde, und darüber hinaus bis zu 15 Mol-% von mindestens einem Ester der Acryl- oder Methacrylsäure abgeleitete Struktureinheiten enthält.

2. Thermoplastische Zusammensetzung nach Anspruch 1, dadurch gekennzeichnet, daß der Norm-Fließindex des Polymers (B) 1 bis 50 dg/min beträgt.

3. Thermoplastische Zusammensetzung nach einem der Ansprüche 1 und 2, dadurch gekennzeichnet, daß sie darüber hinaus 1 bis 20% mindestens eines Produkts der Polykondensation an Esterfunktionen, das ein höheres Molekulargewicht als 1000 aufweist, enthält, diese Ester sind von Alken- und/oder Polyalkendiolen und von Dicarbonsäuren oder von Säurealkoholen abgeleitet.

4. Thermoplastische Zusammensetzung nach einem der Ansprüche 1 bis 3, dadurch gekennzeichnet, daß sie darüber hinaus mindestens ein Gleitmittel enthält.

5. Thermoplastische Zusammensetzung nach Anspruch 4, dadurch gekennzeichnet, daß dieses Gleitmittel ausgewählt ist unter den Salzen der Carbonsäuren und einem Metall, das ausgewählt ist unter den Elementen der Gruppe IA, IIA und IIB des Periodensystems, den oxidierten Polyethylenwachsen, den Fettsäureestern und N,N'-Distearinsäureethylendiamid.

6. Thermoplastische Zusammensetzung nach einem der Ansprüche 4 und 5, dadurch gekennzeichnet, daß das Gleitmittel in 100 Gew.-Anteilen des Gemischs (A) + (B) zu bis zu 4 Gew.-Anteilen vorliegt.

7. Thermoplastische Zusammensetzung nach einem der Ansprüche 1 bis 6, dadurch gekennzeichnet, daß sie darüber hinaus mindestens ein Flammschutzmittel enthält.

8. Technische Erzeugnisse, die durch Spritzen, Extrudieren oder Warmformen einer thermoplastischen Zusammensetzung nach einem der Ansprüche 1 bis 7 erhalten wurden.

## Claims

1. Thermoplastic composition with high impact strength, comprising :
– from 75 to 99% by weight of a polymer (A) of acrylonitrile-butadiene-styrene type consisting of at least one terpolymer obtained by grafting of (a) at least one vinylaromatic monomer and of (b) at least one unsaturated nitrile onto (c) at least one rubber, the said terpolymer being dispersed in a matrix of a copolymer containing units derived from (d) at least one unsaturated nitrile and from (e) at least one vinylaromatic monomer, the overall composition of the said polymer (A) being such that it contains, per 100 parts by weight, from 17 to 35 parts of unsaturated nitrile, from 10 to 60 parts of rubber and from 10 to 60 parts of vinylaromatic monomer, and
– from 1 to 25% by weight of at least one ethylene polymer (B) containing :
• at least 82 mol% of units derived from ethylene,
• from 0.3 to 3 mol% of units derived from maleic anhydride, characterized in that the said ethylene polymer (B) is an ungrafted maleic anhydride polymer and in that it additionally contains units derived from at least one ester of acrylic or methacrylic acid in a proportion of up to 15 mol%.

2. Thermoplastic composition according to Claim 1, characterized in that the standard melt index of the polymer (B) is between 1 and 50 dg/min.

3. Thermoplastic composition according to either of Claims 1 and 2, characterized in that it additionally comprises from 1 to 20% of at least one polycondensation product containing ester functional groups, exhibiting a molecular weight higher than 1000, the said esters being derived from alkylene- and/or polyalkylenediols and from dicarboxylic acids or from alcohol-acids.

4. Thermoplastic composition according to one of Claims 1 to 3, characterized in that it additionally comprises at least one lubricant.

5. Thermoplastic composition according to Claim 4, characterized in that the said lubricant is chosen from the carboxylic acid salts of a metal chosen from the elements of groups IA, IIA and IIB of the Periodic Classification, oxidized polyethylene waxes, fatty acid esters and N,N'-ethylenebisstearamide.

6. Thermoplastic composition according to either of Claims 4 and 5, characterized in that the said lubricant is present in a proportion of up to 4 parts by weight per 100 parts by weight of the mixture (A) + (B).

7. Thermoplastic composition according to one of Claims 1 to 6, characterized in that it additionally comprises at least one flame-retardant agent.

8. Industrial articles obtained by injection, extrusion or thermoforming of a thermoplastic composition according to one of Claims 1 to 7.